# EUROPÄISCHE PATENTSCHRIFT

(11) **EP 0 377 253 B1**
(45) Veröffentlichungstag und Bekanntmachung des Hinweises auf die Patenterteilung: **03.08.1994**
(21) Anmeldenummer: 89203293.9
(22) Anmeldetag: 21.12.1989
(51) Int. Cl.: G01N 21/74, G01N 21/31, G01N 1/00

(54) **Atomisiereinrichtung aus hochschmelzendem Metall**
Atomizer made of a high-melting metal
Dispositif automiseur fabriqué métal à température de fusion élevée

(30) Priorität: 04.01.1989 CS 75/89
(43) Veröffentlichungstag der Anmeldung: 11.07.1990
(73) Patentinhaber: METALLWERK PLANSEE GESELLSCHAFT M.B.H., 6600 Reutte, Tirol (AT)
(72) Erfinder: Ortner, Hugo, Dr., A-6600 Höfen (AT); Hlavac, Robert, Ing., Na staré silnici 57 PSC 15096 (CS); Wilhartitz, Peter, Dr., A-6600 Ehenbichl (AT); Sychra, Vaclav, Jaselská 111291 PCS 16000 (CS); Dolezal, Jiri, Ing., Skolská 1152 PSc 25301 (CS); Püschel, Petr, Ing., Jana Vrby 1580/8 PSC 43401 (CS)
(74) Vertreter: Lohnert, Wolfgang, Dr.

(56) Entgegenhaltungen:
- CS-A- 174 728
- DE-A- 3 528 439
- DE-U- 8 714 670
- US-A- 4 407 582

## Beschreibung

Die Erfindung betrifft eine Atomisiereinrichtung aus hochschmelzendem Metall für die flammenlose Atomabsorptions-Spektroskopie, bestehend aus einer hohlzylindrischen Küvette mit radial verlaufenden Stromzuführungen, wobei die Atomisiereinrichtung durch zwei übereinander angeordnete streifenförmige Blechteile gebildet wird, die in ihrem Mittelabschnitt mit je einer halbzylindrischen Ausformung die hohlzylindrische Küvette bilden.

Bei der flammenlosen Atomabsorptions-Spektroskopie wird die zu untersuchende Probe in eine in der Regel rohrförmige Küvette aus Graphit, seltener aus hochschmelzenden Metallen, wie Wolfram oder Molybdän, eingebracht, die durch Hindurchleiten von elektrischem Strom stoßartig erhitzt wird. Dadurch wird die Probe zu einer Atomwolke atomisiert, in welcher die gesuchten Elemente der Probe in atomarem Zustand vorliegen. Diese Atomwolke wird mit einem Meßlichtbündel, das den Resonanzlinien eines gesuchten Elementes entspricht, in Richtung der Küvettenachse durchstrahlt. Aus der Absorption des Meßlichtbündels wird auf die Menge des gesuchten Elementes geschlossen.

Um eine genaue Analyse der Probe zu ermöglichen, ist es notwendig, eine möglichst gute räumliche und zeitliche Temperaturkonstanz der Küvette genau zum Zeitpunkt der Atomisierung zu erreichen, um sogenannte Matrixeffekte zu vermeiden. Matrixeffekte entstehen dadurch, daß Verbindungen des gesuchten Elementes mit anderen Komponenten der Analysenprobe oder des Küvettenmaterials in Zonen geringerer Temperatur beständig sein können. Dadurch wird das Analysenergebnis verfälscht oder zumindest die Meßempfindlichkeit herabgesetzt.

Eine konstruktive Maßnahme die sich in der Vergangenheit zur Erreichung dieser Eigenschaften bewährt hat, ist die Verwendung eines getrennten, meistens innerhalb der Küvette angeordneten Körpers zur Aufnahme der Probe, der vor allem einen gewissen Verzögerungseffekt der Aufheizung im Probenaufgabebereich und damit eine isotherme Atomisierung bewirken soll.

Die DE-PS 29 24 123 sowie die DE-PS 22 25 421 beschreiben beispielsweise derartige spezielle Einrichtungen für die flammenlose Atomabsorptions-Spektroskopie, die einen getrennten Innenkörper aufweisen.

Diese spezielle Ausführung einer Atomisiereinrichtung hat bedeutende Vorteile hinsichtlich der Analysenpräzision erbracht. Die Kosten des getrennten Innenkörpers liegen jedoch etwa in der gleichen Größenordnung wie die Kosten für die Küvette selbst und verteuern daher die Gesamtkosten der Analyse erheblich.

Eine weitere Maßnahme die sich bei Atomisiereinrichtungen zur Erreichung eines gewissen Verzögerungseffektes bewährt hat, ist die Aufheizung der Küvette über seitliche Stromzuführungen von den Enden her.

In der US-PS 4 407 582 wird beispielsweise eine Küvette aus Graphit beschrieben, bei welcher der Strom zum Aufheizen über Y-förmige Kontaktstücke oder eine geschlitzte Hülse, die an speziellen Verdickungen der Küvette anliegt, ausschließlich an den Enden der Küvette zugeführt wird. Mit einer derartigen Ausführung lassen sich ähnliche Eigenschaften wie bei einer Atomisiereinrichtung mit getrennten Innenkörpern erreichen. Die Ausführung hat sich jedoch nur bei der Verwendung von Graphit als Küvettenmaterial und bedingt durch die speziellen elektrischen und thermischen Eigenschaften des Graphits nur für besonders kleine Abmessungen von Küvetten bewährt.

Aus der CSSR-Anmeldung 174 728 ist eine Atomisiereinrichtung aus hochschmelzendem Metall, wie Wolfram, Molybdän oder Tantal, bekannt, die aus einer rohrförmigen Küvette mit seitlich parallel zur Rohrachse verlaufenden Stromzuführungen besteht. Sie wird durch zwei übereinander angeordnete streifenförmige Blechteile mit halbzylindrischem Mittelabschnitt gebildet, die an den seitlichen Stromzuführungen in gekühlten Klemmvorrichtungen eingespannt werden.

Nachteilig bei einer derartigen Atomisiereinrichtung ist, daß sich durch den großen Wärmeabfluß über die gekühlten Klemmvorrichtungen keine konstante Temperaturverteilung über den gesamten Querschnitt der Küvette erzielen läßt. Darüberhinaus muß auch bei dieser Ausführung ein getrennter Innenkörper verwendet werden, um den erwünschten Verzögerungseffekt in der Aufheizung im Probenaufgabebereich zu erreichen.

In der DE-OS 35 34 417 wird eine Atomisiereinrichtung aus Graphit beschrieben, bei der die Stromzuführungen mit der Küvette eine Einheit bilden. In bevorzugten Ausgestaltungsformen weisen die Stromzuführungen den Querschnitt vermindernde Durchbrechungen in Richtung der Küvettenachse auf. Auf diese Art und Weise wird ein Wärmeabfluß durch die gekühlten Klemmvorrichtungen weitgehend vermieden. Aber auch bei dieser Atomisiereinrichtung ist es nicht möglich, einen Verzögerungseffekt in der Aufheizung im Probenaufgabebereich zu erreichen, so daß auch hier zur Erzielung einer befriedigenden Analysenpräzision ein getrennter Probeaufnahmekörper in Form eines Tiegels verwendet werden muß, der unabhängig von der Aufheizung der Küvette aufgeheizt wird.

Der Erfindung liegt daher die Aufgabe zugrunde, eine Atomisiereinrichtung für die flammenlose Atomabsorptions-Spektroskopie derart auszubilden, daß eine möglichst gute räumliche und zeitliche Temperaturkonstanz über den vollen Querschnitt entlang der gesamten Küvette genau zum Zeitpunkt der Atomisierung und damit eine hohe Analysenpräzision erreicht wird, ohne daß getrennte Zusatzeinrichtungen, wie Innenkörper oder Tiegel, notwendig sind.

Erfindungsgemäß werden sich die Stromzuführungen des ersten Teiles über die gesamte axiale Länge des Zylindermantels der Küvette, die Stromzuführungen des zweiten Teils hingegen nur über die axialen Endabschnitte des Zylindermantels der Küvette erstrecken.

Auf diese Art und Weise wird ein gewisser Verzögerungseffekt im Probenaufgabebereich erreicht, so daß genau zum Zeitpunkt der Atomisierung eine hervorragende räumliche und zeitliche Temperaturkonstanz entlang der Küvette erreicht wird. Es erfolgt dadurch eine isotherme Atomisierung bei der Matrixeffekte weitgehend ausgeschaltet sind. Die Analysenpräzision entspricht zumindest derjenigen, die mit Atomisiereinrichtungen, die mit getrennten Innenkörpern oder Tiegeln arbeiten, erreicht wird. Da durch die erfindungsgemäße Ausführung der Atomisiereinrichtung diese zusätzlichen Innenkörper oder getrennten Tiegel entfallen können, sind die Kosten für die Analyse erheblich günstiger.

Wird das Teil mit dem Probenaufgabebereich, das in der Regel mit einer Mulde versehen ist, so ausgestaltet, daß sich die Stromzuführungen im wesentlichen nur über die Endabschnitte der Küvette erstrecken, kann eine weitergehende Eliminierung der Matrixeffekte erreicht werden, die noch besser ist als bei Atomisiereinrichtungen mit getrennten Innenkörpern oder Tiegeln.

In besonders bevorzugten Ausgestaltungen der Erfindung werden die Stromzuführungen des zweiten Teiles parallel zur Längsachse der Küvette geschlitzt bzw. der Mittelabschnitt der Stromzuführungen herausgetrennt.

Zur Anpassung der Küvette an spezielle Analysenaufgaben kann es vorteilhaft sein, die Stromzuführungen des ersten Teiles im Bereich des Mittelabschnittes der Küvette mit parallel zur Längsachse der Küvette verlaufenden Bohrungen zu versehen.

Als Materialien für die Atomisiereinrichtung sind beispielsweise Wolfram, Molybdän oder Tantal geeignet; insbesondere Wolfram hat sich aufgrund seines höchsten Schmelzpunktes bewährt.

Um einen Verzug der Atomisiereinrichtung bei den für die Atomisierung der Probe notwendigen hohen Temperaturen zu vermeiden, ist es vorteilhaft, die halbzylindrischen Mittelabschnitte der beiden Blechteile an den Randbereichen durch eingeformte Rippen zu verstärken.

Im folgenden wird die Erfindung anhand von Figuren näher erläutert.

Es zeigen:
- Figur 1: eine erfindungsgemäße Atomisiereinrichtung mit übereinander angeordneten Teilen in perspektivischer Ansicht
- Figur 2: das Unterteil der Atomisiereinrichtung nach Figur 1 in perspektivischer Ansicht
- Figur 3: das Unterteil einer Atomisiereinrichtung nach Figur 1 in geänderter Ausführung.

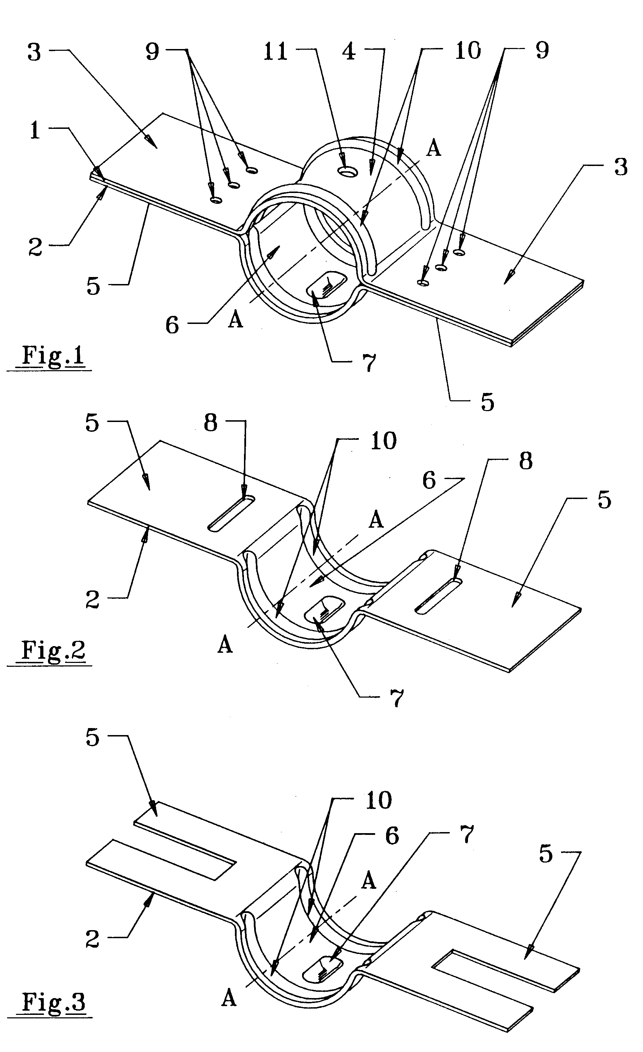

Figur 1 zeigt eine erfindungsgemäße Atomisiereinrichtung in einbaufertigem Zustand mit übereinander angeordneten Teilen -1- und -2-. Nähere Details des Unterteiles -2- sind aus Figur 2 zu ersehen.

Zwei streifenförmige Blechteile -1-, -2- gleicher Breite aus 0,127 mm starkem Wolframblech sind in ihrem Mittelabschnitt jeweils mit einer halbzylindrischen Ausformung -4-, -6- versehen. Durch spiegelverkehrte Anordnung der Teile -1- und -2- übereinander wird eine hohlzylindrische Küvette gebildet.
Die derart lose übereinander angeordneten Blechteile -1- und -2- werden an den Stromzuführungen -3- und -5- zwischen nicht dargestellten gekühlten Klemmvorrichtungen eingespannt. Durch einen ausreichend hohen Preßdruck dieser Klemmvorrichtung und entsprechend genaue Toleranzen der Blechteile -1- und -2- wird die für die Atomisierung notwendige Dichtigkeit der hohlzylindrischen Küvette erreicht. Das Oberteil -1- der Atomisiereinrichtung weist in der Mitte des halbzylinderförmigen Küvettenabschnittes -4- eine kreisförmige Öffnung -11- zur Einbringung des Probenmaterials auf. Das Unterteil -2- der Atomisiereinrichtung ist das Teil mit dem Probenaufgabebereich und weist in der Mitte des halbzylinderförmigen Küvettenmittelabschnittes -6- eine eingearbeitete Mulde -7- auf, in der das Probenmaterial gesammelt wird. In die Randbereiche der Küvette sind Verstärkungsrippen -10- eingearbeitet, um die Verzugsfestigkeit der Küvette bei den hohen Atomisierungstemperaturen zu verbessern. Das Unterteil -2- weist in den Stromzuführungen -5- nahe zum Übergang in den halbzylindrischen Abschnitt -6- parallel zur Zylinderachse A-A verlaufende symmetrische Schlitze -8- auf. Diese Schlitze -8-, die beispielsweise mittels Laser eingebracht werden, begrenzen den Strompfad der Stromzuführungen -5- an den Endbereichen des halbzylindrischen Abschnittes -6- auf schmale Stege. Auf diese Art und Weise erfolgt die Aufheizung des Unterteiles zuerst nur an den Enden des halbzylindrischen Abschnittes -6-. Erst durch die Erhöhung des elektrischen Widerstandes der Endbereiche aufgrund der erhöhten Temperatur erfolgt auch im Mittelbereich des halbzylindrischen Abschnittes -6- eine Aufheizung durch direkten Stromdurchgang. Der Verzögerungseffekt in der Aufheizung, der dadurch erreicht wird, liegt im Bereich von Millisekunden. Im Gegensatz dazu erfolgt die Aufheizung des halbzylindrischen Abschnittes -4- des Oberteiles -1- im wesentlichen gleichzeitig über die gesamte Länge der Küvette. Lediglich durch die in den Stromzuführungen -3- parallel zur Zylinderachse A-A angeordneten Bohrungen -9- wird eine gewisse Steuerung des Stromflusses erreicht, die in bestimmten Fällen zu nochmals verbesserten Analysenbedingungen führt.
Wesentlich ist, daß es erst durch diese spezielle unterschiedliche Aufheizung von Ober- und Unterteil genau zum Zeitpunkt der Atomisierung zu einer zeitlichen Temperaturkonstanz, die sich über die gesamte Länge der Küvette erstreckt, kommt, so daß eine isotherme Atomisierung mit äußerst genau reproduzierbaren Analysenergebnissen ermöglicht wird.

Figur 3 zeigt eine weitere vorteilhafte Ausgestaltung eines Unterteiles -2- der Atomisiereinrichtung, bei der der Mittelabschnitt der Stromzuführungen -5- z. B. durch Stanzen entfernt ist und auf diese Weise eine Aufheizung des halbzylindrischen Abschnittes -6- von den Enden her erreicht wird.

Entsprechend den Figuren ist die Atomisiereinrichtung so aufgebaut, daß sich die Stromzuführungen -3- des Oberteiles -1- über die gesamte Länge der Küvette erstrecken, während sich die Stromzuführungen -5- des Unterteiles -2- nur über die Endabschnitte der Küvette erstrecken.
Durch diese Ausgestaltung einer erfindungsgemäßen Atomisiereinrichtung lassen sich die besten Analysenergebnisse erzielen.
Es ist jedoch ebenfalls möglich, die Atomisiereinrichtung so aufzubauen, daß sich die Stromzuführungen -5- des Unterteiles -2- über die gesamte Länge der Küvette erstrecken, während sich die Stromzuführungen -3- des Oberteiles -1- nur über die Endabschnitte der Küvette erstrecken. Auch mit einer derart aufgebauten Atomisiereinrichtung ist die Analysenpräzision zumindest ebenso gut wie bei Atomisiereinrichtungen mit getrennten Innenkörpern oder Tiegeln.

## Patentansprüche

1. Atomisiereinrichtung aus hochschmelzendem Metall für die flammenlose Atomabsorptions-Spektroskopie, bestehend aus einer hohlzylindrischen Küvette mit radial verlaufenden Stromzuführungen, wobei die Atomisiereinrichtung durch zwei übereinander angeordnete streifenförmige Blechteile (1;2) gebildet wird die in ihrem Mittelabschnitt (4;6) mit je einer halbzylindrischem Ausformung die hohlzylindrische Küvette bilden,
**dadurch gekennzeichnet**,
daß sich die Stromzuführungen (3;5) des ersten Teiles (1;2) über die gesamte axiale Länge des Zylindermantels der Küvette, die Stromzuführungen (3;5) des zweiten Teiles (1;2) hingegen nur über die axialen Endabschnitte des Zylindermantels der Küvette erstrecken.

2. Atomisiereinrichtung aus hochschmelzendem Metall für die flammenlose Atomabsorptions-Spektroskopie nach Anspruch 1, dadurch gekennzeichnet, daß das zweite Teil (1;2) das Teil (2) mit dem Probenaufgabebereich ist.

3. Atomisiereinrichtung aus hochschmelzendem Metall für die flammenlose Atomabsorptions-Spektroskopie nach Anspruch 1 oder 2, dadurch gekennzeichnet, daß die Stromzuführungen (3;5) des zweiten Teiles (1;2) parallel zur Längsachse (AA) der Küvette mit Schlitzen (8) versehen sind.

4. Atomisiereinrichtung aus hochschmelzenden Metall für die flammenlose Atomabsorptions-Spektroskopie nach Anspruch 1 oder 2, dadurch gekennzeichnet, daß bei den Stromzuführungen (3;5) des zweiten Teiles (1;2) der Mittelabschnitt herausgetrennt ist.

5. Atomisiereinrichtung aus hochschmelzendem Metall für die flammenlose Atomabsorptions-Spektroskopie nach einem der Ansprüche 1 bis 4, dadurch gekennzeichnet, daß die Stromzuführungen (3;5) des ersten Teiles (1;2) im Bereich des Mittelabschnittes der Küvette mit parallel zur Längsachse (AA) der Küvette verlaufenden Bohrungen (9) versehen sind.

6. Atomisiereinrichtung aus hochschmelzendem Metall für die flammenlose Atomabsorptions-Spektroskopie nach einem der Ansprüche 1 bis 5, dadurch gekennzeichnt, daß als hochschmelzendes Metall Wolfram verwendet wird.

7. Atomisiereinrichtung aus hochschmelzendem Metall für die flammenlose Atomabsorptions-Spektroskopie nach einem der Ansprüche 1 bis 6, dadurch gekennzeichnet, daß die halbzylindrischen Mittelabschnitte (4;6) der beiden Blechteile (1;2) an den Randbereichen durch eingeformte Rippen (10) verstärkt sind.

## Claims

1. Atomiser made of a metal with a high melting point for flameless atomic absorption spectroscopy,consisting of a hollow cylindrical vessel with radially extending electricity supply lines, the atomiser being formed by two strips of sheet metal (1; 2) disposed one above the other, whose central sections (4; 6) form the hollow cylindrical vessel with a respective semi-cylindrical convexity, characterised in that the electricity supply lines (3; 5) of the first part extend over the total axial length of the cylindrical jacket of the vessel, whereas the electricity supply lines (3; 5) of the second part (1; 2) extend only over the axial end sections of the cylindrical jacket.

2. Atomiser made of a metal with a high melting point for flameless atomic absorption spectroscopy according to claim 1, characterised in that the second part (1; 2) is the part (2) with the area for introducing the sample.

3. Atomiser made of a metal with a high melting point for flameless atomic absorption spectroscopy according to claim 1 or 2, characterised in that the electricity supply lines (3; 5) of the second part (1; 2) are provided with slots (8) parallel to the longitudinal axis (AA) of the vessel.

4. Atomiser made of a metal with a high melting point for flameless atomic absorption spectroscopy according to claim 1 or 2, characterised in that in the electricity supply lines (3; 5) of the second part (1; 2) the central section is separate.

5. Atomiser made of a metal with a high melting point for flameless atomic absorption spectroscopy according to one of claims 1 to 4, characterised in that the electricity supply lines (3; 5) of the first part (1; 2) are provided with bores (9) extending parallel to the longitudinal axis (AA) of the vessel in the region of the central section of the vessel.

6. Atomiser made of a metal with a high melting point for flameless atomic absorption spectroscopy according to one of claims 1 to 5, characterised in that the metal with a high melting point used is tungsten.

7. Atomiser made of a metal with a high melting point for flameless atomic absorption spectroscopy according to one of claims 1 to 6, characterised in that the semi-cylindrical central sections (4; 6) of the two sheet-metal parts (1; 2) are reinforced at the edges by moulded ridges (10).

## Revendications

1. Dispositif d'atomisation en métal réfractaire pour la spectroscopie par absorption atomique sans flamme, constitué d'une cuvette cylindrique creuse comportant des arrivées de courant s'étendant radialement, le dispositif d'atomisation étant formé de deux pièces en tôle (1 ; 2) en forme de bande superposées qui, dans leur zone médiane (4 ; 6) présentent chacune une déformation semi-cylindrique formant la cuvette cylindrique creuse, **caractérisé** par le fait que les arrivées de courant (3 ; 5) de la première pièce (1 ; 2) s'étendent sur toute la longueur axiale de l'enveloppe cylindrique de la cuvette alors que les arrivées de courant (3 ; 5) de la deuxième pièce (1 ; 2) s'étendent en revanche uniquement sur les parties terminales axiales de l'enveloppe cylindrique de la cuvette.

2. Dispositif d'atomisation en matériau réfractaire pour la spectroscopie par absorption atomique sans flamme selon la revendication 1, **caractérisé** par le fait que la deuxième pièce (1 ; 2) est la pièce (2) comportant la zone de chargement de l'échantillon.

3. Dispositif d'atomisation en matériau réfractaire pour la spectroscopie par absorption atomique sans flamme selon la revendication 1 ou 2, **caractérisé** par le fait que les arrivées de courant (3 ; 5) de la deuxième pièce (1 ; 2) sont pourvues de fentes (8) parallèles à l'axe longitudinal (AA) de la cuvette.

4. Dispositif d'atomisation en matériau réfractaire pour la spectroscopie par absorption atomique sans flamme selon la revendication 1 ou 2, **caractérisé** par le fait que la zone médiane des arrivées de courant (3 ; 5) de la deuxième pièce (1 ; 2) est découpée.

5. Dispositif d'atomisation en matériau réfractaire pour la spectroscopie par absorption atomique sans flamme selon l'une des revendications 1 à 4, **caractérisé** par le fait que les arrivées de courant (3 ; 5) de la première pièce (1 ; 2) sont pourvues dans la région de la zone médiane de la cuvette, de perçages (9) s'étendant parallèlement à l'axe longitudinal (AA) de la cuvette.

6. Dispositif d'atomisation en matériau réfractaire pour la spectroscopie par absorption atomique sans flamme selon l'une des revendications 1 ou 5, **caractérisé** par le fait qu'on utilise du tungstène comme métal réfractaire.

7. Dispositif d'atomisation en matériau réfractaire pour la spectroscopie par absorption atomique sans flamme selon l'une des revendications 1 à 6, **caractérisé** par le fait les parties médianes semi-cylindriques (4 : 6) des deux pièces de tôle (1 : 2) sont renforcées sur les bords par des nervures (10) moulées.
